# EUROPEAN PATENT SPECIFICATION

(11) **EP 3 464 931 B1**
(45) Date of publication and mention of the grant of the patent: **16.09.2020**
(21) Application number: 17733056.0
(22) Date of filing: 30.05.2017
(51) Int. Cl.: F16F 7/112, B62K 25/08, F16F 7/116

(54) **FRONT FORK ASSEMBLY, FRONT FORK COMPRISING THE SAME, AND MOTORCYCLE**
VORDERRADGABELANORDNUNG, VORDERRADGABEL DAMIT UND MOTORRAD
ENSEMBLE DE FOURCHE AVANT, FOURCHE AVANT COMPRENANT L'ENSEMBLE DE FOURCHE AVANT, ET MOTOCYCLETTE

(30) Priority: 02.06.2016 NL 2016884
(43) Date of publication of application: 10.04.2019
(73) Proprietor: Tractive Suspension B.V., 5431 ST Cuijk (NL)
(72) Inventor: LINDEMAN, Eric Alexander, 6642 AP Beuningen (NL)
(74) Representative: Jacobs, Bart
(86) International application number: PCT/NL2017/050347
(87) International publication number: WO 2017/209606

(56) References cited:
- JP-A- 2014 008 932
- US-A- 4 925 198
- US-A- 6 050 558
- US-A1- 2015 034 427

## Description

The present invention relates to a front fork assembly and to a front fork comprising the same. The present invention further relates to a motorcycle that is provided with such a front fork assembly or front fork.

A motorcycle comprises a front fork that connects a motorcycle's front wheel and axle to the motorcycle frame. It typically comprises a telescopic unit, which unit comprises a first elongated tubular section and a second elongated tubular section, wherein the first tubular section is at least partially received in the second tubular section in a slideable manner, such that the first and second tubular sections can perform a telescopic motion with respect to each other along their longitudinal axes.

Near its top, the front fork is mounted to the frame of the motorcycle, typically using a coupling element known as a triple tree. Typically, the first tubular section is mounted above the second tubular section. This configuration will hereinafter be referred to as the regular configuration. Alternatively, the first tubular section may be mounted closer to the wheels. This later configuration is known as an upside-down fork.

With respect to the suspension, several types of front forks can be distinguished. A first type comprises a spring or other resilient member mounted to or in the telescopic unit. This resilient member is configured for subjecting the telescopic motion to a spring force. Moreover, the resilient member defines an unsprung section and a sprung section of the telescopic unit when this unit is mounted in the motorcycle. However, the resilient member may also be mounted spaced apart from the telescopic unit. For example, in a Telelever® configuration, the first and second tubular sections are each independently hingedly connected to the motorcycle frame using respective arms and/or frame parts. In this configuration, the resilient member is mounted between the arms and/or frame parts. In an embodiment, the second tubular section, being located close to the wheel axis, is connected to the motorcycle frame using an arm that on one end is hingedly connected to the motorcycle frame and on the other end is hingedly connected to the second tubular section. An upper end of the first tubular section is hingedly connected to a frame part of the motorcycle frame using a ball joint. The resilient member can in this case be mounted in between this frame part and the aforementioned arm.

A common problem encountered when driving a motorcycle relates to the front or rear wheels losing contact with the ground. These problems are referred to as wheel-hop or chatter. A known solution to counter these problems is to use tuned mass dampers mounted at different positions on the motorcycle, as disclosed by JP 5702071.

JP2014008932A discloses a front fork assembly as defined by the preamble of claim 1. This document discloses a telescopic unit having the second tubular section mounted near the steering bar and the first tubular section near the wheel axle. The telescopic movement of the tubular sections is subjected to a spring force that is provided by a spring. According to this document, a tuned mass damper, operating in a frequency range between 15-25 Hz, is mounted in the first tubular section above the spring. The tuned mass damper comprises a mass that is able to perform an oscillatory movement parallel to the longitudinal axes of the telescopic unit.

A front fork assembly is further disclosed in US 6,050,558. In this document, an application of an inertial suspension stabilizer in competition motorcycles is described. Here, the stabilizer is mounted to the horizontal stabilizing bar of the front-side suspension or it is mounted in the axle of the wheel. In this known stabilizer, a mass element is configured to move in a horizontal direction to reduce lateral movement.

The applicant has found that, although the abovementioned solution provides an improvement over other existing designs, the steering properties and traction of the motorcycle during heavy braking and corner entry may still be unsatisfactory.

It is an object of the invention to provide a solution in which the abovementioned problem does not occur or at least to a lesser extent.

According to the invention, this object is achieved with the front fork assembly as defined in claim 1 which is characterized in that the tuned mass damper is fixedly attached to the unsprung section of the telescopic unit.

The applicant has found that by fixedly attaching the tuned mass damper to the unsprung section of telescopic unit, the variation in the force and/or force component pushing the tire to the road surface can be reduced, thereby improving riding characteristics such as the steering properties and traction.

The present invention relates to the regular configuration wherein the first tubular section is connected to the steering bar and the second tubular section to the front wheel bearing axis, and to the upside-down configuration, wherein the second tubular section is connected to the steering bar and the first tubular section to the front wheel bearing axis. In both configurations, the resilient member, which is configured for subjecting the telescopic motion to a spring force, is mounted in or on the first or second tubular section, depending on which section corresponds to the unsprung section of the telescopic unit.

The present invention also relates to the Telelever® configuration, wherein the first tubular section is connected to the steering bar and the second tubular section to the front wheel bearing axis, but wherein the resilient member for subjecting the telescopic motion to a spring force is arranged spaced apart from these sections.

The tuned mass damper may comprise a mass element guiding device and a mass element, wherein the mass element guiding device is configured for guiding the mass element to allow the mass element to slide relative to the mass element guiding device when performing the oscillatory movement. As an example, the mass element guiding device may comprise a housing that is elongated along a direction parallel to the longitudinal axis of the first and second tubular sections, and wherein the mass element is slideably arranged in the housing, wherein the mass element is able to slide back and forth in the housing along the longitudinal direction of the housing.

The tuned mass damper may comprise a further resilient member arranged in between the housing and the mass element for subjecting the sliding movement of the mass element relative to the housing to a spring force, wherein the further resilient member preferably comprises a compressed gaseous medium and/or a spring, more preferably a resilient member made out of elastic material.

The further resilient member need not be fixedly coupled to the housing and/or the mass element. For instance, the further resilient member may comprise a coil spring that is arranged in between a first end of the housing and the mass element. In this case, the first end of the housing and/or the mass element is provided with guiding structures, such as protrusions, to ensure that the spring is guided to the correct position relative to the housing and/or mass element.

Regardless the mounting of the spring, i.e. fixedly or loosely attached, it may be pre-biased or not. Moreover, the housing may comprise a pair of said further resilient members arranged on respective sides of the mass element.

The tuned mass damper may have an oscillation frequency that is tuned to a dominant oscillation frequency of the unpsrung section encountered while driving. For instance, when the motorcycle encounters a bump, an oscillation may be triggered. During this oscillation, the front wheel will move back and forth in along the longitudinal axis of the telescopic unit. This oscillation will reduce the contact force between the front wheel and the ground. In extreme cases, the front wheel may loose contact with the ground altogether. By designing the tuned mass damper to have an oscillation frequency that corresponds to this dominant oscillation frequency, the variation in contact force can be reduced. For most motorcycles, this results in an oscillation frequency of the mass element that lies in the range between 8and 20 Hz, more preferably between 10 and 17 Hz.

The present invention is not limited to tuned mass dampers that show a particular damping. More specifically, the present invention could equally apply to tuned mass dampers that have resilient members to couple the mass element to the housing, but wherein the resilient members or other components, do not present a significant amount of damping. An example of such a tuned mass damper, is a mass element fixedly connected on both ends to an ideal spring.

As an example, the housing may comprise an evacuated airtight chamber in which the mass element is slideably received. In this case, the mass element will not be substantially damped by compressed air when it moves back and forth relative to the housing. Depending on the application, such damping may however be desired.

The housing may comprise a liquid filled container in which the mass element is slideably received. In this case, the mass element is damped by the liquid.

The container may have an upper and lower section. In this case, a bypass conduit may be provided between an upper and lower section of the container. For example, during its movement towards an end of the upper section, the mass element will push liquid through the conduit towards the lower section. In a further embodiment, the flow resistance of the bypass conduit may be adjustable. For instance, an adjustable throttle valve may be provided in the bypass conduit.

The mass element itself may comprise at least one through hole to allow the liquid to pass between the upper and lower section. In the example above, during its movement towards an end of the upper section, liquid is able to flow through the at least through hole towards the lower section. In a further embodiment, the flow resistance of the at least one through hole may be adjustable. For example, the tuned mass damper may comprise an adjusting element for controlling a throttle opening between the at least one through hole and the upper or lower section.

Alternatively, the mass element guiding device may comprise a guiding rod that is fixedly attached to the unsprung section of the telescopic unit, and wherein the mass element comprises a longitudinal through hole, wherein the guiding rod is arranged at least partially inside the longitudinal through hole. In this case, the mass element slides along the guiding rod. The guiding rod can be mounted to an outside of the telescopic unit. This allows common motorcycle components typically found near the placement area of the tuned mass damper. For example, the mass element can be formed by and/or can be comprised in a front mudguard and/or front fender of the motorcycle.

The resilient member for subjecting the telescopic motion to a spring force can be mounted in the second tubular section. Alternatively, it may be mounted around the first tubular section, wherein the first and second tubular sections each comprise a support, wherein the resilient member is mounted in between the supports.

The resilient member for subjecting the telescopic motion to a spring force may comprise a spring, an elastic material, such as Cellasto®, and/or wherein the resilient member is formed by a gas cylinder.

A first end of the telescopic unit is connectable to a wheel bearing axis of the motorcycle, and a second end of the telescopic unit opposite to the first end is connectable to a steering device of the motorcycle, wherein the tuned mass damper is arranged in between the first end and the resilient member. In the regular configuration, the first end corresponds to an end of the second tubular section. In the upside-down configuration, the first end corresponds to an end of the first tubular section.

In the regular configuration, the tuned mass damper can be arranged in the second tubular section. The front fork assembly may comprise a damper for damping the telescopic motion, wherein the damper is arranged inside the second tubular section in between second end and the tuned mass damper.

In the upside-down configuration, the tuned mass damper can be mounted to or in the first tubular section. Also in this configuration, a damper may be provided for damping the telescopic motion, wherein the damper can be arranged in the second tubular section.

According to a further aspect, the present invention provides a front fork for a motorcycle, comprising a first and second fork member that are spaced apart in a parallel manner, wherein at least one of the fork members comprises the front fork assembly as described above.

The first and second fork member may be substantially identical. Alternatively, the first fork member may comprise the front fork assembly as described above, but the second fork member may only comprise a further telescopic unit that is configured as the telescopic unit in the first fork member. In other words, the tuned mass damper can be only comprised in the first fork member. In such embodiments, it may be advantageous to arrange the damper for damping the telescopic motion of the further telescopic unit and the tuned mass damper in different fork members in view of available space in the fork members,

According to a further aspect, the present invention provides a motorcycle comprising the front fork assembly or the front fork as described above.

Next, the invention will be described in more detail referring the appended drawings, wherein:
Figures 1A-1C illustrate a front fork having a regular configuration with an externally mounted tuned mass damper in accordance with the present invention;
Figures 2A-2C illustrate a front fork having an upside-down configuration with an externally mounted tuned mass damper in accordance with the present invention;
Figures 3A-3C illustrate a front fork having a Telelever® configuration with an externally mounted tuned mass damper in accordance with the present invention;
Figures 4A-4C illustrate a front fork having a regular configuration with an internally mounted tuned mass damper in accordance with the present invention;
Figures 5A-5C illustrate a front fork having an upside-down configuration with an internally mounted tuned mass damper in accordance with the present invention;
Figures 6A-6C illustrate a front fork having a Telelever® configuration with an internally mounted tuned mass damper in accordance with the present invention;
Figures 7A-7C illustrate different embodiments of a tuned mass damper according to the present invention;
Figures 8A and 8B illustrate cross sections of the fork members of the front fork depicted in figure 4; and
Figures 9A and 9B illustrate another embodiment of an externally mounted tuned mass damper in accordance with the present invention.

In the description below, elements or components that are identical or which have similar functionality will be referred to using the same reference signs.

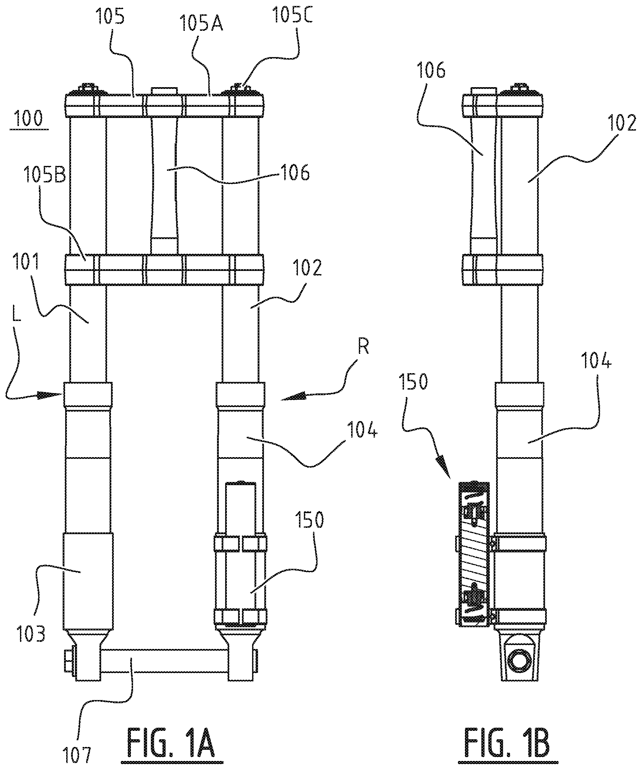

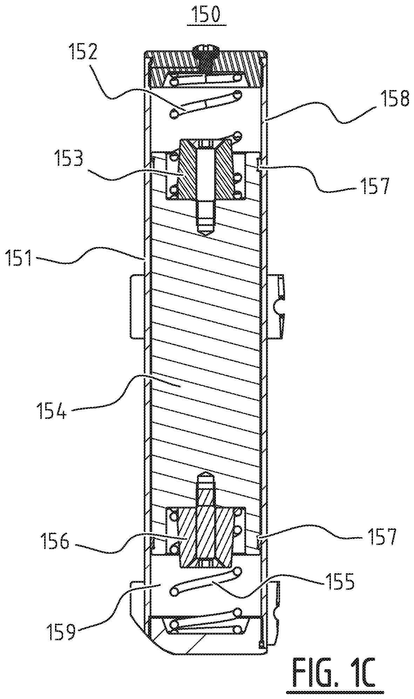

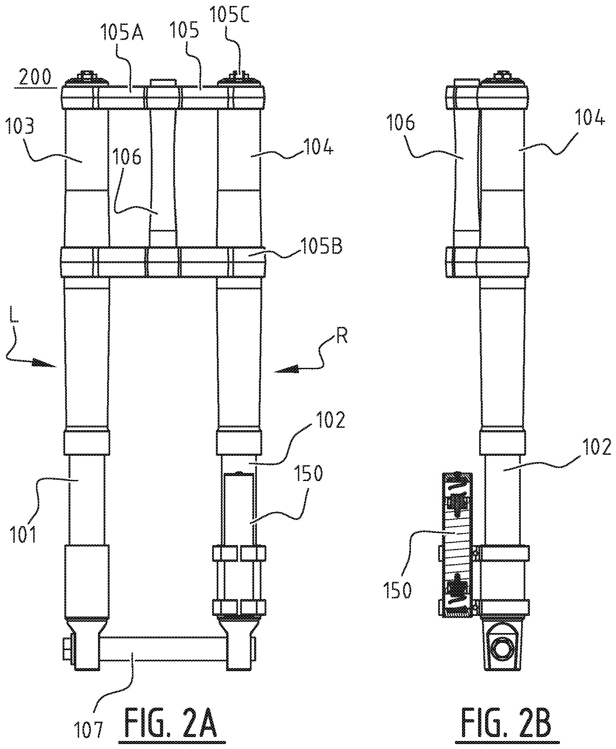

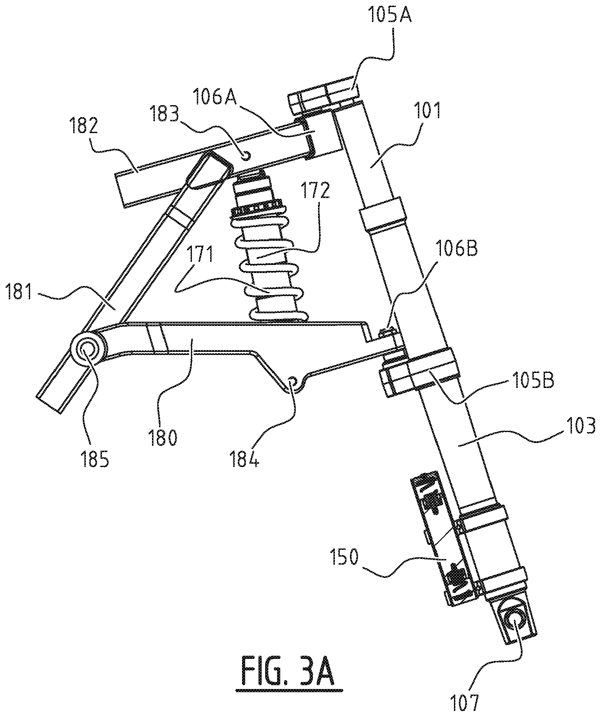

Figures 1-3 show different embodiments of the present invention in which a tuned mass damper 150 is externally mounted. Figures 1A-1C illustrate a front fork 100 having a regular configuration, figures 2A-2C illustrate a front fork 200 having an upside-down configuration, and figures 3A-3C illustrate a front fork 300 having a Telelever® configuration.

In each of these configurations, the front fork comprises a pair of fork members, i.e. a left fork member L and a right fork member R. Each of these members comprises a first tubular section 101, 102 and a second tubular section 103, 104 that can move telescopically with respect to each other. Here, first tubular section 101, 102 and second tubular section 103, 104 are part of respective telescopic units.

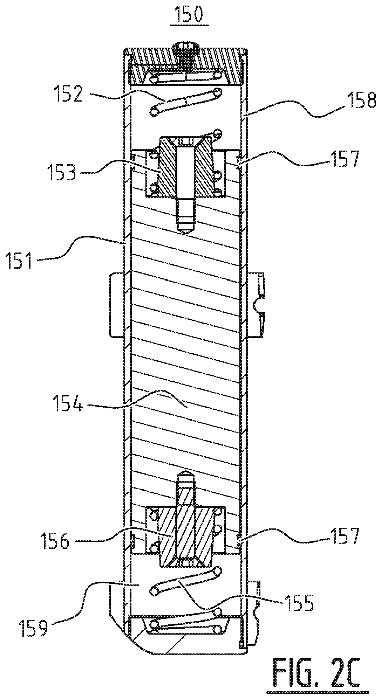

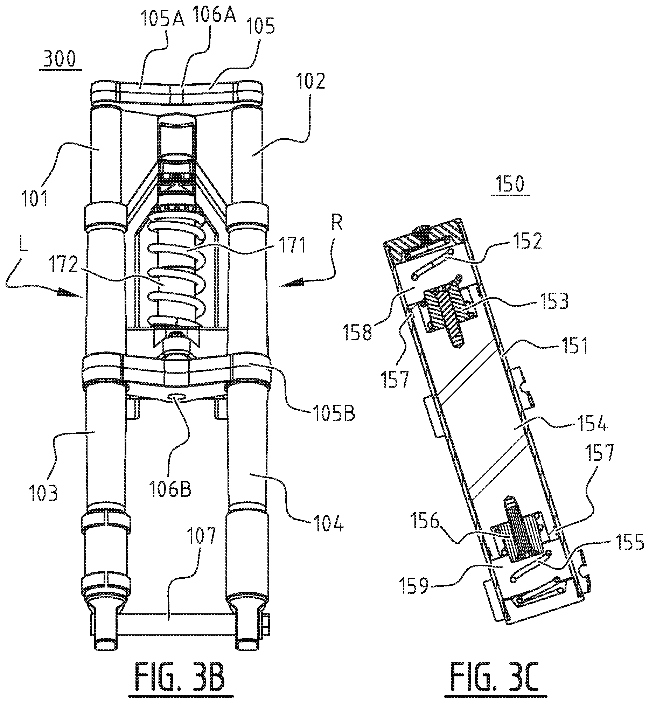

Fork members L, R are mutually coupled by means of a triple tree 105, also referred to a yoke. Triple tree 105 comprises two plate members 105A, 105B having appropriate through holes through which first tubular sections 101, 102 (figures 1 and 3) or second tubular sections 103, 104 (figures 2) pass. In addition, an axis 106 is provided by which the front fork is pivotally coupled to the frame of the motorcycle. On top plate member 105A, known connection members 105C are provided to fixedly attach the first or second tubular sections to plate member 105A.

The front fork according to the invention also comprises a wheel bearing axis 107 that is, depending on the configuration, coupled to either the first 101, 102 or the second 103, 104 tubular sections.

In the Telelever® configuration shown in figures 3A-3C, a spring 171 and a damper 172 are also provided. However, in this configuration spring 171 and damper 172 are mounted spaced apart from the first and second tubular sections 101-104. Second tubular sections 103, 104 are coupled using a pair of first arms 180 to respective second arms 181 that are fixedly mounted to the frame of the motorcycle. The frame of the motorcycle is hingedly coupled to a pair of third arms 182, which in turn are coupled to first tubular section 101, 102.

The connection between first arms 180 and second tubular section 103, 104 comprises a plate member 105B that is fixedly attached to second tubular section 103, 104. Plate member 105B defines a pivot point 106B around which front fork 300 is able to pivot to enable steering of the motorcycle. First arms 180 are on one end fixedly connected to plate member 105B, and on another end hingedly to second arm 181, by means of a hinge 185.

Third arms 182 are hingedly coupled to the frame of the motorcycle. A spring 171 and damper 172 are hingedly mounted between third arms 182 and first arms 180, using hinges 183, 184. Third arms 182 are fixedly connected to a plate member 105A. Also this latter plate defines a pivot point 106A around which front fork 300 is able to pivot, see figure 3B. It should be noted that the present invention is not limited to the Telelever® configuration shown in figures 3.

Compared to figures 1-2, spring 171 is mounted at a different position relative to the telescopic unit. Here, the unsprung section of the telescopic unit also comprises the second tubular sections 103,104, whereas the first tubular sections 101, 102 are comprised in the sprung section.

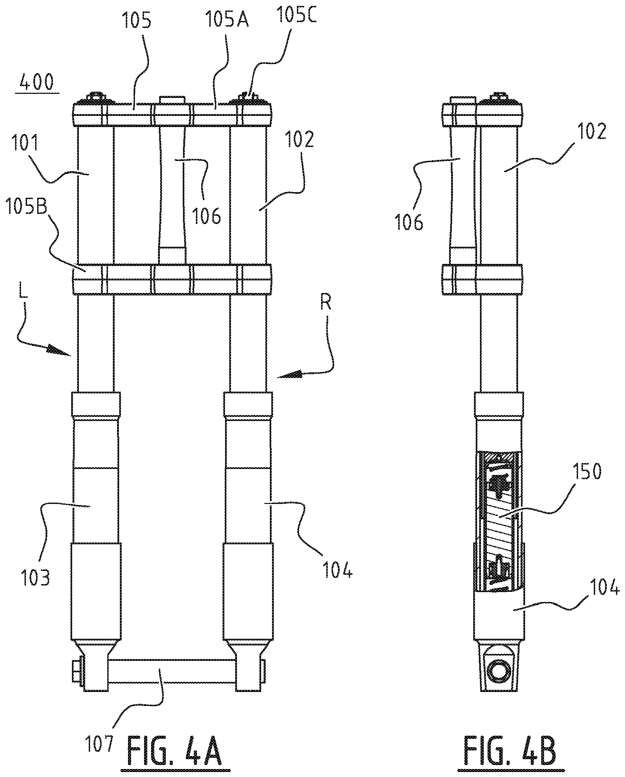

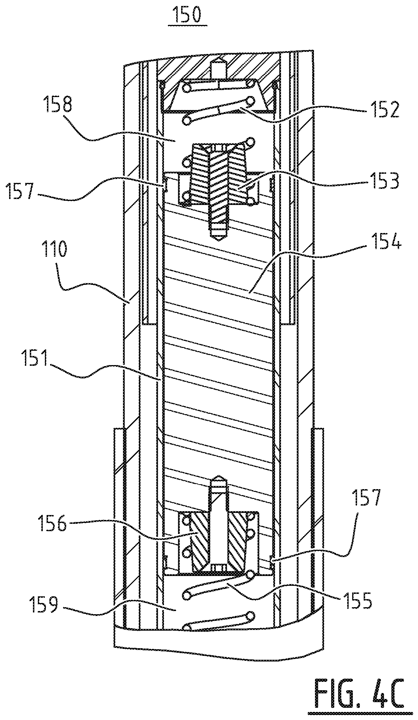

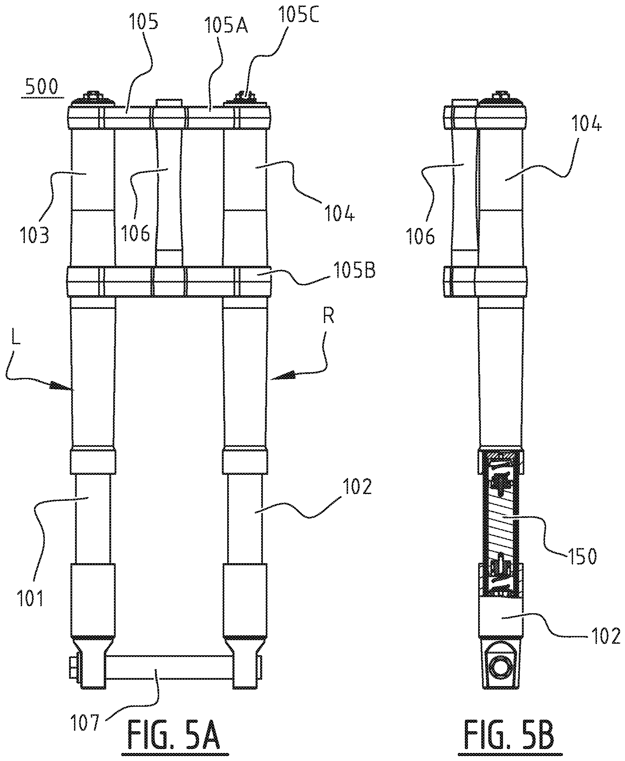

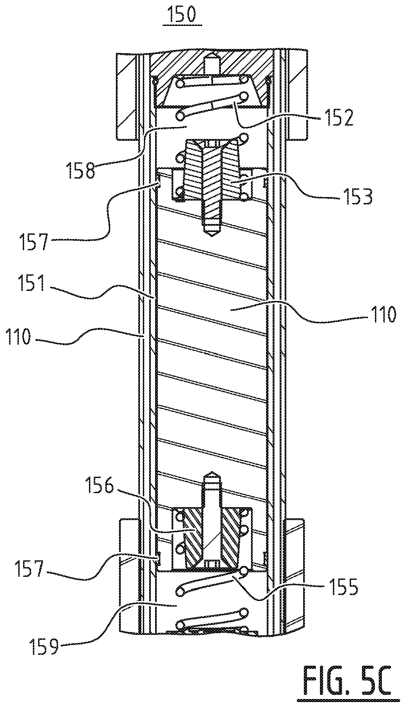

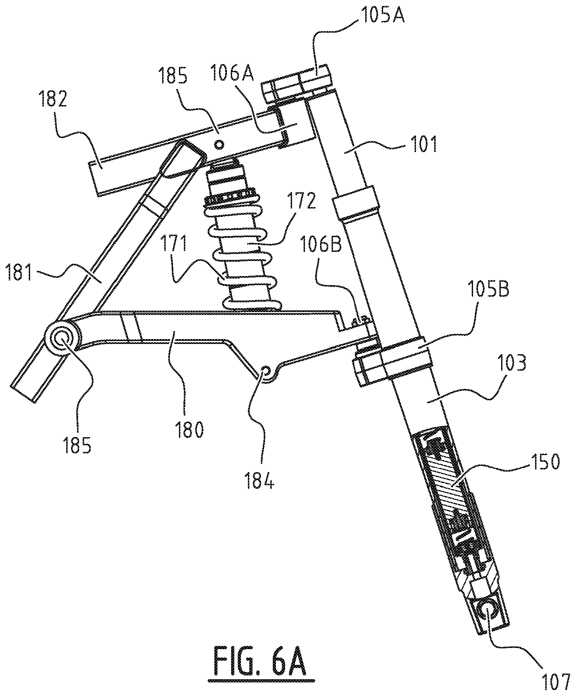

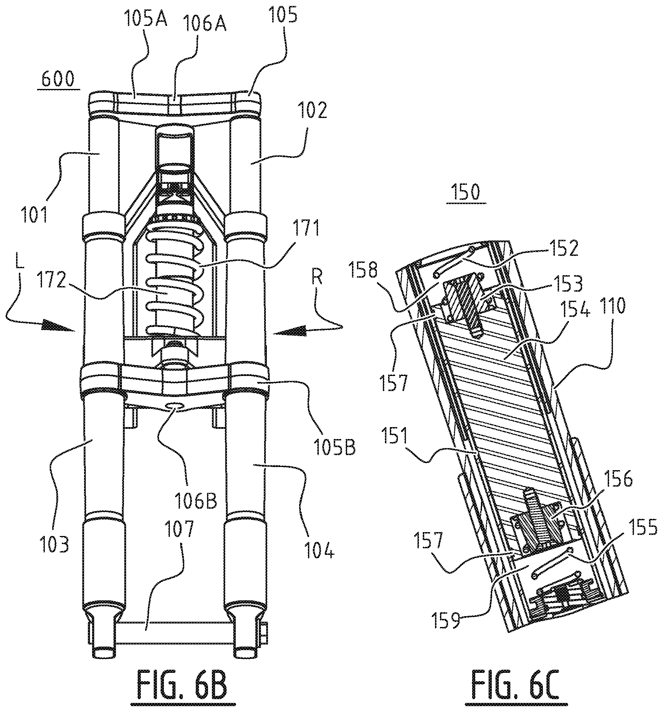

The front fork according to the invention comprises a Tuned Mass Damper (TMD) that is either mounted externally (figures 1-3) or internally (figures 4-6). Moreover, according to the present invention, the TMD is mounted to the unsprung section of the telescopic unit. This particular placement improves the steering properties and traction of the motorcycle during heavy braking and corner entry.

Front forks 400-600 illustrated in figures 4-6, respectively, correspond to front forks 100-300, with the exception that TMD 150 is now mounted internally inside a wall 110 of the relevant tubular section. For convenience, the same reference signs are used to refer to elements being identical or similar with respect to the front forks having the externally mounted TMD 150. Furthermore, the construction of TMD 150 in figures 1-6 is substantially identical, apart from being mounted internally or externally.

As shown in figure 1C, TMD 150 comprises a container 151 in which a pair of springs 152, 155 is mounted. These springs act on a mass element 154 that is moveably mounted in container 151 by means of guiding rings 157. At both ends of mass element 154, mounting structures 153, 156 may be provided for mounting springs 152, 155.

In the embodiments in figures 1-6, the container is evacuated. Therefore, spaces 158, 159 in between mass element 154 and container 151 are essentially kept at a vacuum. Due to this vacuum, the movement of mass element 154 is solely damped by springs 152, 155. Therefore, if springs 152, 155 would behave as ideal springs having no damping coefficient, the movement of mass element 154 would be essentially undamped.

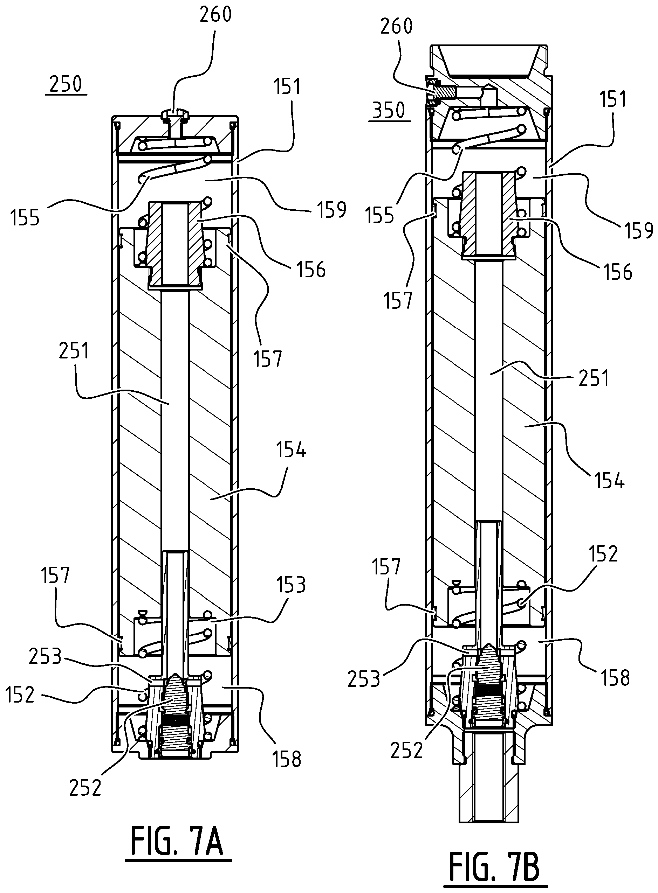

Figures 7A-7C show embodiments of a TMD 250, 350, 450 that comprise internal damping. This damping is achieved by having a liquid inside spaces 158, 159. However, to allow mass element 154 to move sufficiently, liquid has to be exchanged between spaces 158, 159. This is achieved using a through hole 251 in mass element 154. The diameter of this hole determines the amount of damping during the motion of mass element 154 relative to container 151.

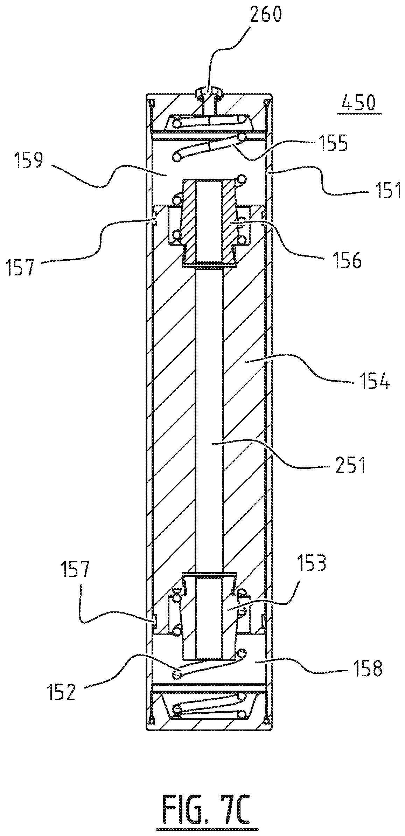

The embodiments in figures 7A and 7B, corresponding to an externally mounted TMD and an internally mounted TMD, respectively, comprise an adjusting element 252 in the form of a needle. This needle is able to determine the flow resistance between through hole 251 and a radial opening 253. For the figure 7A and 7B embodiments, liquid has to pass from space 159, through hole 251, through radial opening 253, inside space 158. By adjusting the position of needle 252, the passage between through hole 251 and radial opening 253 can be throttled less or more, thereby determining the amount of damping. In the figure 7C embodiment, needle 252 is absent. The internal damping of TMD 450 can therefore not be adjusted.

In each of the embodiment in figures 7A-7C, a fill opening in container 151 is provided through which the liquid can be supplied to container 151. A sealing element 260 closes this opening after filling.

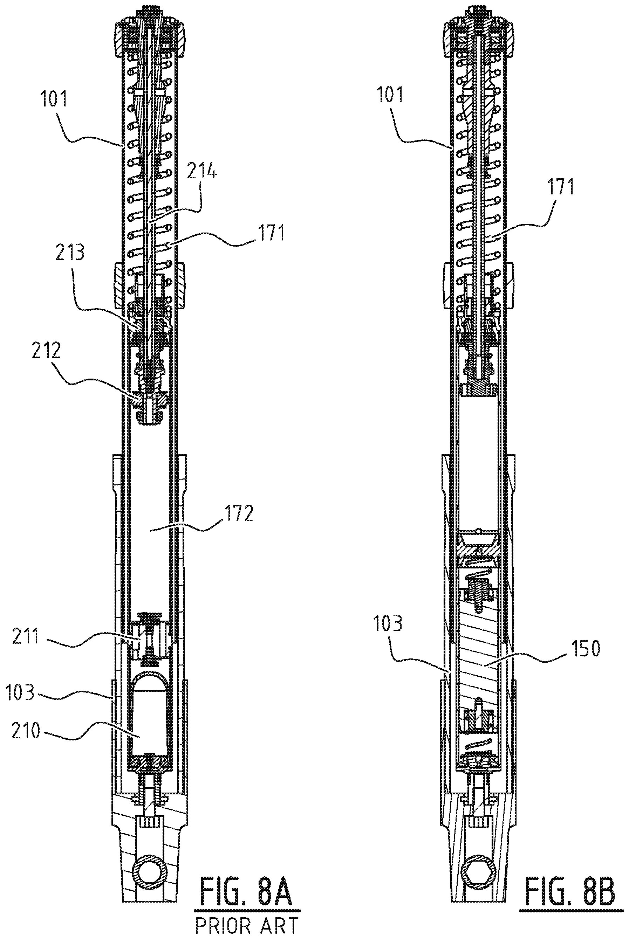

Front forks 100-600 each comprise a resilient member in the form of a spring 171 for subjecting the telescopic motion of first and second tubular sections to a spring force. For example, figure 8A illustrates a cross section of fork member L of figure 4. Fork member L comprises a first tubular section 101 and a second tubular section 103. A spring 171 is provided that provides a spring force in response to a telescopic motion between tubular sections 101 and 103. As illustrated, spring 171 is provided in first tubular section 101. In addition to spring 171, a hydraulic damper 172 is provided in second tubular section 103.This damper dampens the telescopic motion. Fork member L is known in the art.

Damper 172 comprises a nitrogen filled membrane and a bottom valve 211. It further comprises a main piston 212 that is provided with a compression and rebound shim setting. Piston 212 is connected with a spindle 214 that is fixedly attached to first tubular section 101. A sealing and bearing 213 is provided by which spindle 214 is able to actuate piston 212. Damping is achieved when first tubular section 101 moves inward relative to second tubular section 103. This will cause main piston 212 to move through a fluid, such as oil, inside damper 172. Piston 212 is provided with through openings to throttle the flow of fluid between the chambers on opposite sides of piston 212.

Figure 8B illustrates a cross section of fork member R of figure 4. Compared to fork member L, it does not comprise damper 172 thereby saving space. According to the invention, this space can be used to place the TMD. The front fork in figure 1 therefore comprises a spring 171 in each fork member, a damper in one fork member L, and a TMD damper in the other fork member R. However, the present invention does not exclude embodiments of a front fork wherein both fork members comprise a spring 171, a TMD, and a damper 172, or embodiments wherein both fork members comprise a spring 171 and a TMD but wherein only one fork member a damper 172.

Here, it is noted that both spring 171 and damper 172 are known in the art and require no further elaboration. Although front forks 100, 200, 400, 500 have a spring that is mounted inside first tubular section 101, 102, it should be noted that it is equally possible to arrange the spring around first tubular section 101, 102. For example, first tubular sections 101, 102 and second tubular sections 103, 104 could each be provided with supports, in between which supports the spring could be mounted.

Spring 171 defines an unsprung section and a sprung section of the telescopic unit when this unit is mounted in the motorcycle. More in particular, the unsprung section in figure 8A and 8B comprises each component of the telescopic unit that is configured to move relative to the motorcycle frame as a result of the telescopic movement. Hence, the unsprung section of a telescopic unit may comprise spring 171 and the second tubular section 103, 104. Furthermore, the unsprung mass of the motorcycle as a whole can be defined as the mass that is unsuspended by spring 171 and may for example comprise the mass of spring 171, second tubular sections 103, 104 (figures 1A-1C) or first tubular sections 101, 102 (figures 2A-2C), wheel bearing axis 107, and the front wheels of the motorcycle.

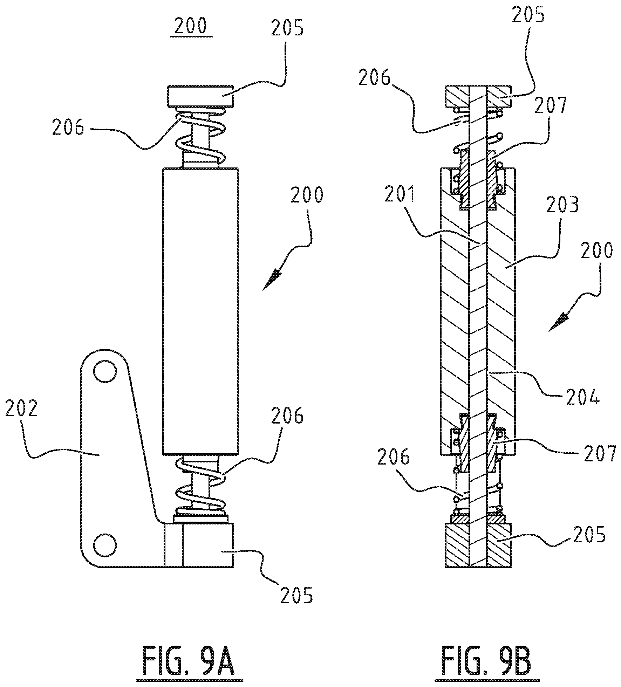

Figures 9A and 9B illustrate an externally mounted tuned mass damper 200 that comprises a guiding rod 201 that is fixedly connected to a mounting bracket 202 by which tuned mass damper 200 can be externally mounted to the telescopic unit. Tuned mass damper 200 further comprises a mass element 203 that is provided with a longitudinal through hole 204. As illustrated, guiding rod 201 is at least partially received in through hole 204 allowing mass element 203 to be guided while moving along a direction parallel to guiding rod 201.

Guiding rod 201 is fixedly connected to two supports 205. These supports cooperate with mounting structures 207 for the mounting of spring coils 206.

Mass element 203 can be connected to a mudguard. The present invention does however not exclude other motorcycle components to be connected to mass element 203.

Although the present invention has been described using detailed embodiments thereof, the skilled person will understand that the present invention is not limited thereto, but that modifications are possible without deviating from the scope of the invention, which is defined by the appended claims.

## Claims

1. A front fork assembly for a motorcycle, comprising:
a telescopic unit comprising a first elongated tubular section (101, 102) and a second elongated tubular section (103, 104), wherein the first tubular section is at least partially received in the second tubular section in a slideable manner, such that the first and second tubular sections can perform a telescopic motion with respect to each other along their longitudinal axes;
a resilient member (171) configured for subjecting the telescopic motion to a spring force, said resilient member defining an unsprung section and a sprung section of the telescopic unit when this unit is mounted in said motorcycle; and
a tuned mass damper (150, 250, 350, 450, 200) comprising a mass element (154, 203) that is able to perform an oscillatory movement parallel to the longitudinal axes;
**characterized in that** the tuned mass damper is fixedly attached to the unsprung section of the telescopic unit, wherein a first end of the telescopic unit is connectable to a wheel bearing axis (107) of said motorcycle, and wherein a second end of the telescopic unit opposite to the first end is connectable to a steering device of said motorcycle, wherein the tuned mass damper is arranged in between the first end and the resilient member.

2. The front fork assembly according to claim 1, wherein the first end is formed by an end of the second tubular section, wherein the tuned mass damper is arranged in the second tubular section, or wherein the first end is formed by an end of the first tubular section, wherein the tuned mass damper is mounted to or in the first tubular section.

3. The front fork assembly according to claim 2, further comprising a damper (172) for damping the telescopic motion, said damper being arranged inside the second tubular section in between second end and the tuned mass damper.

4. The front fork assembly according to any of the claims 1-3, wherein the tuned mass damper comprises a mass element guiding device and a mass element, wherein the mass element guiding device is configured for guiding the mass element to allow the mass element to slide relative to the mass element guiding device when performing said oscillatory movement.

5. The front fork assembly according to claim 4, wherein the mass element guiding device comprises a housing (151) that is elongated along a direction parallel to the longitudinal axis of the first and second tubular sections, and wherein the mass element is slideably arranged in said housing, wherein the mass element is able to slide back and forth in said housing along said longitudinal direction of said housing.

6. The front fork assembly according to claim 4, wherein the housing comprises a further resilient member (152, 155) arranged in between the housing and the mass element configured for subjecting the sliding movement of the mass element relative to the housing to a spring force, wherein the further resilient member preferably comprises a compressed gaseous medium and/or a spring, more preferably a resilient member made out of elastic material.

7. The front fork assembly according to claim 6, wherein the housing comprises a pair of said further resilient members arranged on respective sides of the mass element.

8. The front fork assembly according to any of the claims 5-7, wherein the housing comprises an evacuated airtight chamber in which the mass element is slideably received.

9. The front fork assembly according to any of the claims 5-7, wherein the housing comprises a liquid filled container in which the mass element is slideably received, further comprising a bypass conduit between an upper and lower section of the container, wherein the mass element comprises at least one through hole (251) to allow the liquid to pass between the upper and lower section.

10. The front fork assembly according to claim 9, wherein the flow resistance of the bypass conduit and/or the at least one through hole is adjustable.

11. The front fork assembly according to claim 9 or 10, wherein the tuned mass damper comprises an adjusting element (252) for controlling a throttle opening between the at least one through hole and the upper or lower section.

12. The front fork assembly according to claim 4, wherein the mass element guiding device comprises a guiding rod (201) that is fixedly attached to the unsprung section of the telescopic unit, and wherein the mass element comprises a longitudinal through hole (204), wherein the guiding rod is arranged at least partially inside the longitudinal through hole, wherein the guiding rod is mounted to an outside of the telescopic unit, wherein the mass element is formed by and/or is comprised in a front mudguard and/or front fender of the motorcycle.

13. The front fork assembly according to any of the previous claims, wherein the resilient member for subjecting the telescopic motion to a spring force is mounted in the second tubular section, or wherein the resilient member for subjecting the telescopic motion to a spring force is mounted around the first tubular section, wherein the first and second tubular sections each comprise a support, wherein the resilient member is mounted in between the supports.

14. A front fork (400, 500, 600) for a motorcycle, comprising a first and second fork member (L, R) that are spaced apart in a parallel manner, wherein at least one of the fork members comprises the front fork assembly of any of the claims 1-13.

15. A motorcycle comprising the front fork (400, 500, 600) as defined in claim 14 or the front fork assembly as defined in any of the claims 1-13.

## Patentansprüche

1. Vorderradgabelanordnung für ein Motorrad, die aufweist:
eine Teleskopeinheit, die einen ersten länglichen röhrenförmigen Abschnitt (101, 102) und einen zweiten länglichen röhrenförmigen Abschnitt (103, 104) aufweist, wobei der erste röhrenförmige Abschnitt wenigstens teilweise im zweiten röhrenförmigen Abschnitt in verschiebbarer Weise aufgenommen ist, sodass der erste und die zweite röhrenförmigen Abschnitt eine Teleskopbewegung bezüglich einander entlang ihrer Längsachsen durchführen können;
ein elastisches Element (171), das eingerichtet ist, die Teleskopbewegung einer Federkraft zu unterziehen, wobei das elastische Element einen ungefederten Abschnitt und einen gefederten Abschnitt der Teleskopeinheit definiert, wenn die Einheit im Motorrad angebracht ist; und
einen feineingestellten Massendämpfer (150, 250, 350, 450, 200), der ein Massenelement (154, 203) aufweist, das in der Lage ist, eine oszillierende Bewegung parallel zu den Längsachsen durchzuführen;
**dadurch gekennzeichnet, dass**
der feineingestellte Massendämpfer fest am ungefederten Abschnitt der Teleskopeinheit befestigt ist, wobei ein erstes Ende der Teleskopeinheit mit einer Radlagerachse (107) des Motorrads verbindbar ist, und wobei ein zweites Ende der Teleskopeinheit gegenüberliegend zum ersten Ende mit einer Lenkvorrichtung des Motorrads verbindbar ist, wobei der feineingestellte Massendämpfer zwischen dem ersten Ende und dem elastischen Element angeordnet ist.

2. Vorderradgabelanordnung nach Anspruch 1, wobei das erste Ende durch ein Ende des zweiten röhrenförmigen Abschnitts ausgebildet ist, wobei der feineingestellte Massendämpfer im zweiten röhrenförmigen Abschnitt angeordnet ist, oder wobei das erste Ende durch ein Ende des ersten röhrenförmigen Abschnitts ausgebildet ist, wobei der feineingestellte Massendämpfer an oder im ersten röhrenförmigen Abschnitt angebracht ist.

3. Vorderradgabelanordnung nach Anspruch 2, die weiterhin einen Dämpfer (172) zum Dämpfen der Teleskopbewegung aufweist, wobei der Dämpfer in dem zweiten röhrenförmigen Abschnitt zwischen dem zweiten Ende und dem feineingestellten Massendämpfer angeordnet ist.

4. Vorderradgabelanordnung nach einem der Ansprüche 1 bis 3, wobei der feineingestellte Massendämpfer eine Massenelement-Führungsvorrichtung und ein Massenelement aufweist, wobei die Massenelement-Führungsvorrichtung eingerichtet ist, das Massenelement zu führen, um dem Massenelement das Gleiten bezüglich der Massenelement-Führungsvorrichtung zu ermöglichen, wenn eine oszillierende Bewegung durchgeführt wird.

5. Vorderradgabelanordnung nach Anspruch 4, wobei die Massenelement-Führungsvorrichtung ein Gehäuse (151) aufweist, das entlang einer Richtung parallel zur Längsachse des ersten und zweiten röhrenförmigen Abschnitts verlängert ist, und wobei das Massenelement verschiebbar im Gehäuse angeordnet ist, wobei das Massenelement dazu ausgelegt ist, im Gehäuse entlang der Längsrichtung des Gehäuses nach hinten und vorne zu gleiten.

6. Vorderradgabelanordnung nach Anspruch 4, wobei das Gehäuse ein weiteres elastisches Element (152, 155) aufweist, das zwischen dem Gehäuse und dem Massenelement angeordnet ist, das eingerichtet ist, die Verschiebebewegung des Massenelements bezüglich des Gehäuses einer Federkraft zu unterziehen, wobei das weitere elastische Element vorzugsweise ein komprimiertes Gasmedium und/oder eine Feder aufweist, bevorzugter ein elastisches Element, das aus einem elastischen Material hergestellt ist.

7. Vorderradgabelanordnung nach Anspruch 6, wobei das Gehäuse ein Paar von weiteren elastischen Elementen aufweist, die an jeweiligen Seiten des Massenelements angeordnet sind.

8. Vorderradgabelanordnung nach einem der Ansprüche 5 bis 7, wobei das Gehäuse eine luftleere luftdichte Kammer aufweist, in der das Massenelement verschiebbar aufgenommen ist.

9. Vorderradgabelanordnung nach einem der Ansprüche 5 bis 7, wobei das Gehäuse einen mit Flüssigkeit gefüllten Behälter aufweist, in dem das Massenelement verschiebbar aufgenommen ist, weiterhin eine Umgehungsleitung zwischen einem oberen und einem unteren Abschnitt des Behälters aufweisend, wobei das Massenelement wenigstens eine Durchgangsöffnung (251) aufweist, um der Flüssigkeit das Durchlaufen zwischen dem oberen und unteren Abschnitt zu ermöglichen.

10. Vorderradgabelanordnung nach Anspruch 9, wobei der Fließwiderstand der Umgehungsleitung und/oder der wenigstens einen Durchgangsöffnung einstellbar ist.

11. Vorderradgabelanordnung nach Anspruch 9 oder 10, wobei der feineingestellte Massendämpfer ein Einstellelement (252) aufweist, um eine Drosselöffnung zwischen der wenigstens einen Durchgangsöffnung und dem oberen oder unteren Abschnitt zu steuern.

12. Vorderradgabelanordnung nach Anspruch 4, wobei die Massenelement-Führungsvorrichtung eine Führungsstange (201) aufweist, die fest am ungefederten Abschnitt der Teleskopeinheit angebracht ist, und wobei das Massenelement eine Längsdurchgangsöffnung (204) aufweist, wobei die Führungsstange wenigstens teilweise in der Längsdurchgangsöffnung angeordnet ist, wobei die Führungsstange an einer Außenseite der Teleskopeinheit angebracht ist, wobei das Massenelement durch eine vordere Radabdeckung und/oder einen vorderen Kotflügel des Motorrads ausgebildet oder darin enthalten ist.

13. Vorderradgabelanordnung nach einem der vorhergehenden Ansprüche, wobei das elastische Element, um die Teleskopbewegung einer Federkraft auszusetzen, im zweiten röhrenförmigen Abschnitt angebracht ist, oder wobei das elastische Element, um die Teleskopbewegung einer Federkraft auszusetzen, um den ersten röhrenförmigen Abschnitt angebracht ist, wobei der erste und der zweite röhrenförmige Abschnitt jeweils eine Halterung aufweisen, wobei das elastische Element zwischen den Halterungen angebracht ist.

14. Vorderradgabel (400, 500, 600) für ein Motorrad, das ein erstes und zweites Gabelelement (L, R) aufweist, die parallel voneinander beabstandet sind, wobei wenigstens eines von den Gabelelementen die Vorderradgabelanordnung nach einem der Ansprüche 1 bis 13 aufweist.

15. Motorrad, das die Vorderradgabel (400, 500, 600) wie in Anspruch 14 definiert oder die Vorderradgabelanordnung wie in einem der Ansprüche 1 bis 13 definiert aufweist.

## Revendications

1. Ensemble de fourche avant destiné à une motocyclette, comprenant :
une unité télescopique comprenant une première section tubulaire allongée (101, 102) et une seconde section tubulaire allongée (103, 104), dans lequel la première section tubulaire est au moins partiellement reçue dans la seconde section tubulaire d'une manière à pouvoir coulisser, de telle sorte que les première et seconde sections tubulaires peuvent présenter un mouvement télescopique l'une par rapport à l'autre suivant leurs axes longitudinaux ;
un élément élastique (171) configuré de manière à soumettre le mouvement télescopique à un effort élastique, ledit élément élastique définissant une section non contrainte et une section contrainte de l'unité télescopique lorsque cette unité est montée sur ladite motocyclette ; et
un amortisseur dynamique accordé (150, 250, 350, 450, 200) comprenant un élément de masse (154, 203) qui peut présenter un mouvement oscillant parallèle aux axes longitudinaux ;
**caractérisé en ce que** l'amortisseur dynamique accordé est fixé à demeure sur la section non contrainte de l'unité télescopique, dans lequel une première extrémité de l'unité télescopique peut être reliée à un axe de palier de roue (107) de ladite motocyclette, et dans lequel une seconde extrémité de l'unité télescopique opposée à la première extrémité peut être reliée à un dispositif de direction de ladite motocyclette, dans lequel l'amortisseur dynamique accordé est agencé entre la première extrémité et l'élément élastique.

2. Ensemble de fourche avant selon la revendication 1, dans lequel la première extrémité est formée par une extrémité de la seconde section tubulaire, dans lequel l'amortisseur dynamique accordé est agencé dans la seconde section tubulaire, ou dans lequel la première extrémité est formée par une extrémité de la première section tubulaire, dans lequel l'amortisseur dynamique accordé est monté sur ou dans la première section tubulaire.

3. Ensemble de fourche avant selon la revendication 2, comprenant, en outre, un amortisseur (172) destiné à amortir le mouvement télescopique, ledit amortisseur étant agencé à l'intérieur de la seconde section tubulaire entre la seconde extrémité et l'amortisseur dynamique accordé.

4. Ensemble de fourche avant selon l'une quelconque des revendications 1 à 3, dans lequel l'amortisseur dynamique accordé comprend un dispositif de guidage d'élément de masse et un élément de masse, dans lequel le dispositif de guidage d'élément de masse est configuré de manière à guider l'élément de masse afin de permettre le coulissement de l'élément de masse par rapport au dispositif de guidage d'élément de masse lorsqu'il présente ledit mouvement oscillant.

5. Ensemble de fourche avant selon la revendication 4, dans lequel le dispositif de guidage d'élément de masse comprend un logement (151) qui est allongé suivant une direction parallèle à l'axe longitudinal des première et seconde sections tubulaires, et dans lequel l'élément de masse est agencé de manière à pouvoir coulisser dans ledit logement, dans lequel l'élément de masse peut coulisser longitudinalement dans ledit logement suivant ladite direction longitudinale dudit logement.

6. Ensemble de fourche avant selon la revendication 4, dans lequel le logement comprend un élément élastique supplémentaire (152, 155) agencé entre le logement et l'élément de masse, configuré manière à soumettre le mouvement coulissant de l'élément de masse par rapport au logement à un effort élastique, dans lequel l'élément élastique supplémentaire comprend, de préférence, un milieux gazeux compressé et/ou un ressort, plus préférablement, un élément élastique réalisé en un matériau élastique.

7. Ensemble de fourche avant selon la revendication 6, dans lequel le logement comprend une paire desdits éléments élastiques supplémentaires agencés sur des côtés respectifs de l'élément de masse.

8. Ensemble de fourche avant selon l'une quelconque des revendications 5 à 7, dans lequel le logement comprend un compartiment étanche sous vide dans lequel l'élément de masse est reçu de manière à pouvoir coulisser.

9. Ensemble de fourche avant selon l'une quelconque des revendications 5 à 7, dans lequel le logement comprend un conteneur rempli de liquide dans lequel l'élément de masse est reçu de manière à pouvoir coulisser, comprenant, en outre, un conduit de contournement entre des sections supérieure et inférieure du conteneur, dans lequel l'élément de masse comprend au moins un orifice traversant (251) afin de permettre le passage du liquide entre les sections supérieure et inférieure.

10. Ensemble de fourche avant selon la revendication 9, dans lequel la perte de charge du conduit de contournement et/ou du au moins un orifice traversant sont réglables.

11. Ensemble de fourche avant selon la revendication 9 ou 10, dans lequel l'amortisseur dynamique accordé comprend un élément de réglage (252) afin de commander un orifice d'étranglement entre le au moins un orifice traversant et la section supérieure ou inférieure.

12. Ensemble de fourche avant selon la revendication 4, dans lequel le dispositif de guidage d'élément de masse comprend une tige de guidage (201) qui est fixée à demeure sur la section non contrainte de l'unité télescopique, et dans lequel l'élément de masse comprend un orifice traversant longitudinal (204), dans lequel la tige de guidage est agencée au moins partiellement à l'intérieur de l'orifice traversant longitudinal, dans lequel la tige de guidage est montée sur un côté externe de l'unité télescopique, dans lequel l'élément de masse est formé par un garde-boue avant et/ou un pare-choc avant de la motocyclette et/ou est intégré à ces derniers.

13. Ensemble de fourche avant selon l'une quelconque des revendications précédentes, dans lequel l'élément élastique destiné à soumettre le mouvement télescopique à un effort élastique est monté dans la seconde section tubulaire, ou dans lequel l'élément élastique destiné à soumettre le mouvement télescopique à un effort élastique est monté autour de la première section tubulaire, dans lequel les première et seconde sections tubulaires comprennent chacune un support, dans lequel l'élément élastique est monté entre les supports.

14. Fourche avant (400, 500, 600) destinée à une motocyclette, comprenant des premier et second éléments de fourche (L, R) qui sont espacés l'un de l'autre en parallèle, dans laquelle au moins l'un des éléments de fourche comprend la fourche avant selon l'une quelconque des revendications 1 à 13.

15. Motocyclette comprenant la fourche avant (400, 500, 600) selon la revendication 14 ou la fourche avant selon l'une quelconque des revendications 1 à 13.
